(19) Europäisches Patentamt
European Patent Office
Office européen des brevets

(11) **EP 4 618 500 A1**

(12) **EUROPEAN PATENT APPLICATION**
published in accordance with Art. 153(4) EPC

(43) Date of publication:
**17.09.2025  Bulletin 2025/38**

(21) Application number: **23899610.2**

(22) Date of filing: **24.10.2023**

(51) International Patent Classification (IPC):
***H04L 43/022*** (2022.01)

(52) Cooperative Patent Classification (CPC):
**H04L 43/022; H04L 43/04; H04L 43/0817**

(86) International application number:
**PCT/CN2023/126168**

(87) International publication number:
**WO 2024/120029 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2022  CN 202211578416**

(71) Applicant: **Huawei Technologies Co., Ltd.
Shenzhen, Guangdong 518129 (CN)**
(72) Inventors:
• **LIU, Tingcai
  Shenzhen, Guangdong 518129 (CN)**
• **YU, Yijun
  Shenzhen, Guangdong 518129 (CN)**
• **XIE, Ning
  Shenzhen, Guangdong 518129 (CN)**
• **GUO, Fei
  Shenzhen, Guangdong 518129 (CN)**
• **JU, Jiuqing
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA MANAGEMENT METHOD, APPARATUS, AND SYSTEM**

(57)    This application provides a data management method, an apparatus, and a system. The method includes: A network device obtains network operation data collected at first frequency and network operation data collected at second frequency, and sends, to a control device, the network operation data collected at the first frequency, where the second frequency is higher than the first frequency. The network device sends a third network operation data set to the control device in response to determining that a first network operation data set collected at the first frequency and/or a second network operation data set collected at the second frequency include/includes abnormal network operation data, where the third network operation data set includes network operation data collected at the second frequency before a moment of an abnormality, and the moment of the abnormality is a collection moment corresponding to the abnormal network operation data. The control device analyzes, based on the third network operation data set, a cause of the abnormal network operation data. Based on the method, the control device may analyze in detail a cause of an abnormality in network operation data.

FIG. 2

## Description

This application claims priority to Chinese Patent Application No. 202211578416.2, filed with the China National Intellectual Property Administration on December 9, 2022 and entitled "DATA MANAGEMENT METHOD, APPARATUS, AND SYSTEM", which is incorporated herein by reference in its entirety.

## TECHNICAL FIELD

This application relates to the communication field, and more specifically, to a data management method and an apparatus.

## BACKGROUND

Currently, data collection and reporting modes between a network device and a control device may include the following two types.

Mode 1: The network device reports, to the control device, network operation data collected at high frequency (for example, once every minute). In this mode, the network device and the control device consume large resources, and communication pressure between the network device and the control device is heavy.

Mode 2: The network device reports, to the control device, network operation data collected at low frequency (for example, once every five minutes). In this mode, although communication pressure between the network device and the control device is relieved, once an abnormality occurs in the network operation data, it is difficult for the control device to analyze, based on the network operation data reported by the network device, a cause of the abnormality.

Therefore, there is still room for further improvement in the data collection and reporting modes between the network device and the control device.

## SUMMARY

This application provides a data management method and an apparatus, to improve data collection and reporting modes between a network device and a control device.

According to a first aspect, a data management method is provided, including:

A network device obtains network operation data collected at first frequency and network operation data collected at second frequency, and sends, to a control device, the network operation data collected at the first frequency, where the second frequency is higher than the first frequency. The network device sends a third network operation data set to the control device in response to determining that a first network operation data set collected at the first frequency and/or a second network operation data set collected at the second frequency include/includes abnormal network operation data, where the third network operation data set includes network operation data collected at the second frequency before a moment of an abnormality, and the the moment of the abnormality is a collection moment corresponding to the abnormal network operation data.

In a second drafting manner, the data management method includes:

A network device obtains network operation data collected at first frequency and network operation data collected at second frequency, and sends, to a control device, the network operation data collected at the first frequency, where the second frequency is higher than the first frequency. When a first network operation data set collected at the first frequency and/or a second network operation data set collected at the second frequency include/includes abnormal network operation data, the network device sends a third network operation data set to the control device, where the third network operation data set includes network operation data collected at the second frequency before a moment of an abnormality, and the moment of the abnormality is a collection moment corresponding to the abnormal network operation data.

In a third drafting manner, the data management method includes:

A network device obtains network operation data collected at first frequency and network operation data collected at second frequency, and sends, to a control device, the network operation data collected at the first frequency, where the second frequency is higher than the first frequency. The network device determines that a first network operation data set collected at the first frequency and/or a second network operation data set collected at the second frequency include/includes abnormal network operation data. The network device sends a third network operation data set to the control device, where the third network operation data set includes network operation data collected at the second frequency before a moment of an abnormality, and the moment of the abnormality is a collection moment corresponding to the abnormal network operation data.

According to this embodiment of this application, the network device may obtain the network operation data collected at the first frequency (low frequency) and the network operation data collected at the second frequency (high frequency). When an abnormality occurs in the collected network operation data, the network device sends, to the control device, the network operation data collected at the high frequency before the moment of the abnormality, to help the control device analyze in detail a cause of the abnormality in the network operation data.

With reference to the first aspect, in some implementations of the first aspect, that the network device sends, to a control device, the network operation data collected at the first frequency includes:

The network device sends, to the control device at third frequency, the network operation data collected at the first frequency, where the third frequency is lower than or equal to the first frequency.

According to this embodiment of this application, for the network operation data collected at the first frequency, frequency at which the network device reports the network operation data to the control device may be lower than the first frequency, to save resources and reduce power consumption of the network device.

With reference to the first aspect, in some implementations of the first aspect, the third network operation data set includes network operation data collected at the second frequency within a first preset time range before the moment of the abnormality.

According to this embodiment of this application, when an abnormality occurs in the collected network operation data, the network device may send, to the control device, the network operation data collected at the second frequency in a period of time before the moment of the abnormality. Compared with sending, to the control device, all network operation data collected at the second frequency before the moment of the abnormality, resource overheads in a reporting process can be reduced.

With reference to the first aspect, in some implementations of the first aspect, the third network operation data set further includes network operation data collected at the second frequency within a second preset time range after the moment of the abnormality.

According to this embodiment of this application, when an abnormality occurs in the collected network operation data, the network device may send, to the control device, the network operation data collected at the second frequency before and after the moment of the abnormality, to help the control device analyze in more detail a cause of the abnormality in the network operation data.

With reference to the first aspect, in some implementations of the first aspect, the third network operation data set includes network operation data that is collected at the second frequency before the moment of the abnormality and that is cached in a buffer.

With reference to the first aspect, in some implementations of the first aspect, the third network operation data set further includes network operation data that is collected at the second frequency after the moment of the abnormality and that is cached in the buffer.

With reference to the first aspect, in some implementations of the first aspect, the method further includes:
The network device obtains first indication information, and checks, based on the first indication information, whether the first network operation data set and/or the second network operation data set include/includes abnormal network operation data.

According to this embodiment of this application, the network device may check a corresponding network operation data set based on an indication of the control device; or the network device may spontaneously determine a network operation data set to be checked. This is not limited in this application.

With reference to the first aspect, in some implementations of the first aspect, before the network device sends the third network operation data set to the control device, the method further includes:
The network device determines that resource usage of the network device is less than a preset threshold.

According to this embodiment of this application, in a possible case, when the resource usage (for example, CPU usage) of the network device is less than the preset threshold, the network device sends the third network operation data set to the control device. In other words, when the resource usage of the network device is greater than the preset threshold, the network device does not send the third network operation data set to the control device, to avoid a plurality of problems (for example, frame freezing, overheating, and efficiency reduction) caused by overload of the network device.

With reference to the first aspect, in some implementations of the first aspect, the abnormal network operation data is network operation data that satisfies an abnormality condition.

With reference to the first aspect, in some implementations of the first aspect, the abnormality condition is that a value of the network operation data falls within a preset first abnormality range; or the abnormality condition is that a value obtained by preprocessing the network operation data falls within a preset second abnormality range.

It may be understood that, how to determine whether network operation data collected at a moment is abnormal is not limited in this application. In other words, there may be a plurality of abnormality conditions.

With reference to the first aspect, in some implementations of the first aspect, the network device is any one of a base station, a core network element, an optical communication device, and a data communication device, the control device is any one of an element management system EMS, a network management system NMS, and an operations support system OSS, and that a network device obtains network operation data collected at first frequency and network operation data collected at second frequency includes:

The network device collects the network operation data at the first frequency and the network operation data at the second frequency.

With reference to the first aspect, in some implementations of the first aspect, the network device is an element management system EMS, the control device is any one of a network management system NMS and an operations support system OSS, and that a network device obtains network operation data collected at first frequency and network operation data collected at second frequency includes:
The network device obtains network operation data collected by a base station at the first frequency and network operation data collected by the base station at the second frequency; the network device obtains network operation data collected by a core network element at the first frequency and network operation data collected by the core network element at the second frequency; the network device obtains network operation data collected by a data communication device at the first frequency and network operation data collected by the data communication device at the second frequency; or the network device obtains network operation data collected by an optical communication device at the first frequency and network operation data collected by the optical communication device at the second frequency.

With reference to the first aspect, in some implementations of the first aspect, the network operation data collected by the base station includes any one of a base station energy consumption value, a user call drop rate, a user access success rate, reference signal received power, and reference signal received quality. The network operation data collected by the core network element includes any one of a user plane throughput, a quantity of user plane sessions, CPU usage of the core network element, and memory usage of the core network element. The network operation data collected by the data communication device includes any one of a packet delay, a data packet jitter rate, a data packet loss rate, a data stream establishment moment, and a data stream end moment. The network operation data collected by the optical communication device includes any one of receive optical power, transmit optical power, a quantity of received data packets, and a quantity of sent data packets.

According to a second aspect, a data management method is provided, including:

A control device receives network operation data collected at first frequency from a network device. The control device receives a third network operation data set from the network device, where the third network operation data set includes network operation data collected at second frequency before a moment of an abnormality, the second frequency is higher than the first frequency, the moment of the abnormality is a collection moment corresponding to abnormal network operation data, and the abnormal network operation data belongs to a first network operation data set collected at the first frequency and/or a second network operation data set collected at the second frequency. The control device analyzes, based on the third network operation data set, a cause of the abnormal network operation data.

According to this embodiment of this application, the control device may receive the network operation data collected at the second frequency (high frequency) before the moment of the abnormality. Compared with Mode 2 in BACKGROUND, in this application, the control device may analyze in more detail and comprehensively the cause of the abnormal network operation data.

With reference to the second aspect, in some implementations of the second aspect, that the control device analyzes, based on the third network operation data set, a cause of the abnormal network operation data includes:

In response to determining, by the control device, that the network operation data collected at the first frequency includes the abnormal network operation data, the control device analyzes, based on the third network operation data set, the cause of the abnormal network operation data.

With reference to the second aspect, in some implementations of the second aspect, the third network operation data set further includes the abnormal network operation data, and that the control device analyzes, based on the third network operation data set, a cause of the abnormal network operation data includes:

In response to determining, by the control device, that the third network operation data set includes the abnormal network operation data, the control device analyzes, based on the third network operation data set, the cause of the abnormal network operation data.

According to a third aspect, a data management method is provided, including:

A network device obtains network operation data collected at first frequency and network operation data collected at second frequency, and sends, to a control device, the network operation data collected at the first frequency, where the second frequency is higher than the first frequency. The control device receives the network operation data collected at the first frequency from the network device. The network device sends a third network operation data set to the control device in response to determining that a first network operation data set collected at the first frequency and/or a second network operation data set collected at the second frequency include/includes abnormal network operation data, where the third network operation data set includes network operation data collected at the second frequency before a moment of an abnormality, and the moment of the abnormality is a collection moment corresponding to the abnormal network operation data. The control device receives the third network operation data set from the network device. The control device analyzes, based on the third network operation data set, a cause of the abnormal network operation data.

According to a fourth aspect, a data management method is provided, including:

A network device collects network operation data at second frequency, and does not collect network operation data at first frequency, where both the first frequency and the second frequency are network operation data collection frequency supported by the network device, and the second frequency is higher than the first frequency. The network device sends a third network operation data set to a control device in response to determining that a second network operation data set collected at the second frequency includes abnormal network operation data, where the third network operation data set includes the abnormal network operation data and network operation data collected by the network device at the second frequency before a moment of an abnormality, and the moment of the abnormality is a collection moment corresponding to the abnormal network operation data.

In a second drafting manner, the data management method includes:

A network device collects network operation data at second frequency, and does not collect network operation data at first frequency, where both the first frequency and the second frequency are network operation data collection frequency supported by the network device, and the second frequency is higher than the first frequency. When a second network operation data set collected by the network device at the second frequency includes abnormal network operation data, the network device sends a third network operation data set to a control device, where the third network operation data set includes the abnormal network operation data and network operation data collected by the network device at the second frequency before a the moment of an abnormality, and the moment of the abnormality is a collection moment corresponding to the abnormal network operation data.

In a third drafting manner, the data management method includes:

A network device collects network operation data at second frequency, and does not collect network operation data at first frequency, where both the first frequency and the second frequency are network operation data collection frequency supported by the network device, and the second frequency is higher than the first frequency. The network device determines that a second network operation data set collected at the second frequency includes abnormal network operation data. The network device sends a third network operation data set to a control device, where the third network operation data set includes the abnormal network operation data and network operation data collected by the network device at the second frequency before a moment of an abnormality, and the moment of the abnormality is a collection moment corresponding to the abnormal network operation data.

According to this embodiment of this application, the network device only collects the network operation data at the second frequency (high frequency), and does not collect the network operation data at the first frequency (low frequency). When an abnormality occurs in the network operation data collected by the network device, the network device sends, to the control device, the network operation data collected at the high frequency before the moment of the abnormality, to help the control device analyze in detail a cause of the abnormality in the network operation data.

With reference to the fourth aspect, in some implementations of the fourth aspect, the third network operation data set includes network operation data collected by the network device at the second frequency within a first preset time range before the moment of the abnormality.

With reference to the fourth aspect, in some implementations of the fourth aspect, the third network operation data set further includes network operation data collected by the network device at the second frequency within a second preset time range after the moment of the abnormality.

With reference to the fourth aspect, in some implementations of the fourth aspect, the third network operation data set includes network operation data that is cached by the network device in a buffer before the moment of the abnormality and that is collected at the second frequency.

With reference to the fourth aspect, in some implementations of the fourth aspect, the third network operation data set further includes network operation data that is cached by the network device in the buffer after the moment of the abnormality and that is collected at the second frequency.

With reference to the fourth aspect, in some implementations of the fourth aspect, the method further includes:

The network device obtains first indication information, and checks, based on the first indication information, whether network operation data in the second network operation data set is normal.

With reference to the fourth aspect, in some implementations of the fourth aspect, before the network device sends the third network operation data set to a control device, the method further includes:

The network device determines that resource usage of the network device is less than a preset threshold.

With reference to the fourth aspect, in some implementations of the fourth aspect, the abnormal network operation data is network operation data that satisfies an abnormality condition.

With reference to the fourth aspect, in some implementations of the fourth aspect, the abnormality condition is that a value of the network operation data falls within a preset first abnormality range; or the abnormality condition is that a value obtained by preprocessing the network operation data falls within a preset second abnormality range.

With reference to the fourth aspect, in some implementations of the fourth aspect, the method further includes:

The network device receives query request information from the control device, where the query request information is used to request the network device to provide a collection frequency supported by the network device. The network device sends query response information to the control device based on the query request information, where the query response information includes the first frequency and the second frequency. The network device receives second indication information from the control device, where the second indication information indicates the network device to collect the network operation data based on the second frequency.

According to a fifth aspect, a data management method is provided, including:

A control device receives a third network operation data set from a network device, where the third network operation data set includes abnormal network operation data and network operation data collected at second frequency before a moment of an abnormality, the moment of the abnormality is a collection moment corresponding to the abnormal network operation data, and the abnormal network operation data belongs to a second network operation data set collected by the network device at the second frequency. The control device analyzes, based on the third network operation data set, a cause of the abnormal network operation data.

According to this embodiment of this application, the control device may receive the network operation data collected at the second frequency (high frequency) before the moment of the abnormality. Therefore, the control device may analyze in more detail and comprehensively the cause of the abnormal network operation data.

With reference to the fifth aspect, in some implementations of the fifth aspect, the method further includes:

The control device sends query request information to the network device, where the query request information is used to request the network device to provide a collection frequency supported by the network device. The control device receives query response information from the network device, where the query response information includes first frequency and the second frequency. The control device sends second indication information to the network device, where the second indication information indicates the network device to collect the network operation data based on the second frequency.

According to a sixth aspect, a data management method is provided, including:

A network device collects network operation data at second frequency, and does not collect network operation data at first frequency, where both the first frequency and the second frequency are network operation data collection frequency supported by the network device, and the second frequency is higher than the first frequency. The network device sends a third network operation data set to a control device in response to determining that a second network operation data set collected at the second frequency includes abnormal network operation data, where the third network operation data set includes the abnormal network operation data and network operation data collected by the network device at the second frequency before a moment of the abnormality, and the moment of the abnormality is a collection moment corresponding to the abnormal network operation data. The control device receives the third network operation data set from the network device. The control device analyzes, based on the third network operation data set, a cause of the abnormal network operation data.

According to a seventh aspect, a data management method is provided, including:

A data collection device collects network operation data at second frequency, and does not collect network operation data at first frequency, and sends, to a network device, the network operation data collected at the second frequency, where the second frequency is higher than the first frequency.

The network device receives the network operation data collected by the data collection device at the second frequency from the data collection device.

The network device sends a third network operation data set to a control device in response to determining that a second network operation data set collected by the data collection device at the second frequency includes abnormal network operation data, where the third network operation data set includes the abnormal network operation data and network operation data collected by the data collection device at the second frequency before a moment of an abnormality, and the moment of the abnormality is a collection moment corresponding to the abnormal network operation data.

The control device receives the third network operation data set.

The control device analyzes, based on the third network operation data set, a cause of the abnormal network operation data.

According to an eighth aspect, a communication apparatus is provided. The communication apparatus may be a network device, an apparatus (for example, a chip, a chip system, or a circuit) in a network device, or an apparatus that can be used together with a network device.

In a possible implementation, the communication apparatus may include modules or units in one-to-one correspondence with the methods/operations/steps/actions described in the first aspect or the fourth aspect. The modules or units may be implemented by a hardware circuit, software, or a combination of a hardware circuit and software.

According to a ninth aspect, a communication apparatus is provided. The communication apparatus may be a control device, an apparatus (for example, a chip, a chip system, or a circuit) in a control device, or an apparatus that can be used together with a control device.

In a possible implementation, the communication apparatus may include modules or units in one-to-one correspondence with the methods/operations/steps/actions described in the second aspect or the fifth aspect. The modules or units may be implemented by a hardware circuit, software, or a combination of a hardware circuit and software.

According to a tenth aspect, a communication apparatus is provided, including a communication interface and a processor. The communication interface is configured to output and/or input signals, and the processor is configured to execute a computer program or instructions stored in a memory, so that the communication apparatus performs the method according to any possible implementation of the first aspect, the second aspect, the fourth aspect, or the fifth aspect.

Optionally, the memory may be included in the communication apparatus. In a manner, the memory and the processor may be disposed separately. In another manner, the memory may be located in the processor and integrated with the processor.

Optionally, the memory may alternatively be outside the communication apparatus and coupled to the processor.

According to an eleventh aspect, a computer-readable storage medium is provided, including a computer program. When the computer program is run on a computer, the computer is enabled to perform the method according to any possible implementation of the first aspect, the second aspect, the fourth aspect, or the fifth aspect.

According to a twelfth aspect, a chip or a chip system is provided. The chip or the chip system includes a processing circuit and an input/output interface, and the processing circuit is configured to perform the method according to any possible implementation of the first aspect, the second aspect, the fourth aspect, or the fifth aspect.

According to a thirteenth aspect, a computer program product is provided. The computer program product includes a computer program (which may also be referred to as code or instructions), and when the computer program is run, a computer is enabled to perform the method according to any possible implementation of the first aspect, the second aspect, the fourth aspect, or the fifth aspect.

According to a fourteenth aspect, a system is provided, including a network device and a control device. The network device is configured to perform the method according to any possible implementation of the first aspect, and the control device is configured to perform the method according to any possible implementation of the second aspect; or the network device is configured to perform the method according to any possible implementation of the fourth aspect, and the control device is configured to perform the method according to any possible implementation of the fifth aspect.

**BRIEF DESCRIPTION OF DRAWINGS**

FIG. 1 shows a system to which this application is applicable;
FIG. 2 shows an example of a schematic interaction diagram of a method according to this application;
FIG. 3 shows an example of a schematic interaction diagram of a method according to this application;
FIG. 4 shows an example of a schematic interaction diagram of a method according to this application;

FIG. 5 shows an example of a schematic interaction diagram of a method according to this application;
FIG. 6 shows an example of a schematic interaction diagram of a method according to this application;
FIG. 7 shows an example of a schematic interaction diagram of a method according to this application;
FIG. 8 shows an example of a schematic interaction diagram of a method according to this application;
FIG. 9 is a block diagram of a communication apparatus according to this application; and
FIG. 10 is a block diagram of a communication apparatus according to this application.

**DESCRIPTION OF EMBODIMENTS**

Technical solutions in embodiments of this application may be applied to various 3rd generation partnership project (3rd generation partnership project, 3GPP) communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, also referred to as a new radio (new radio, NR) communication system, and a future evolved communication system such as a 6th generation (6th generation, 6G) communication system.

It may be understood that the term "and/or" in this specification describes only an association relationship between associated objects and represents that three relationships may exist. For example, A and/or B may represent the following three cases: Only A exists, both A and B exist, and only B exists. In addition, the symbol "/" in this application may represent "and/or". For example, A/B represents A and/or B.

"A plurality of" in embodiments of this application means two or more.

The first, the second, and the like in embodiments of this application are merely described as examples and used to distinguish between described objects, do not indicate an order and do not indicate a particular limitation on a quantity of described objects in embodiments of this application, and shall not constitute any limitation on embodiments of this application.

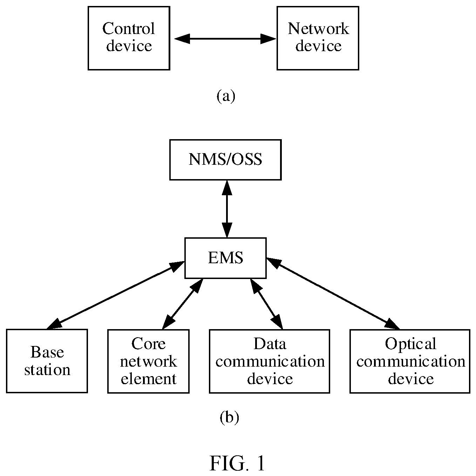

FIG. 1 shows a communication system to which embodiments of this application are applicable. The communication system includes a network device and a control device. It may be understood that the network device and the control device may communicate with each other in a wireless manner, or may communicate with each other in a wired manner. This is not limited in this application.

The following describes the network device and the control device with reference to (b) in FIG. 1.

Case 1:

The network device in embodiments of this application may be any one of a base station, a core network element, a data communication device, and an optical communication device, and the control device may be an element management system (element management system, EMS).

For example, the core network element may be an access and mobility management function (access and mobility management function, AMF) network element, a session management function (session management function, SMF) network element, or the like; the data communication device may be a router or a switch; and the optical communication device may be an optical line terminal (optical line terminal, OLT).

Case 2:

The network device in embodiments of this application may be an EMS, and the control device may be a network management system (network management system, NMS) or an operations support system (operations support system, OSS).

Case 3:

The network device in embodiments of this application may be any one of a base station, a core network element, a data communication device, and an optical communication device, and the control device may be an NMS or an OSS.

In Case 3, the network device and the control device may communicate with each other via an EMS. In this case, the EMS only performs a transparent transmission function when the network device interacts with the control device.

The solutions in embodiments of this application are applicable to a telecommunication network, or applicable to another product or system. For example, the solutions in embodiments of this application are also applicable to a vehicle. A device in the vehicle may report data to a system for managing a vehicle device. In this case, the device in the vehicle may be equivalent to the network device in embodiments of this application, and a module in the system for managing the vehicle device may be equivalent to the control device in embodiments of this application. Similarly, the solutions in embodiments of this application are further applicable to the optical communication field, the data communication field, and the like.

The following describes a technical problem in embodiments of this application.

Currently, data collection and reporting modes between the network device and the control device may include the following two types.

Mode 1: The network device reports, to the control device, network operation data collected at high frequency (for example, once every minute). In this mode, the network device and the control device consume large resources, and communication pressure between the network device and the control device is heavy.

Mode 2: The network device reports, to the control device, network operation data collected at low frequency (for example, once every five minutes). In this mode, although communication pressure between the network device and the control device is relieved, once an abnormality occurs in the network operation data, it is difficult for the control device to analyze, based on the network operation data reported by the network device, a cause of the abnormality.

Therefore, there is still room for further improvement in the existing data collection and reporting modes between the network device and the control device.

For the technical problem, embodiments of this application provide a plurality of methods. Before the methods are described in detail, some terms in embodiments of this application are first described.

(1) Network operation data

In embodiments of this application, the network operation data may be understood as data related to a status of a device, or data related to a communication service.

Network operation data collected by a base station includes any one of a base station energy consumption value, a user call drop rate, a user access success rate, reference signal received power (reference signal received power, RSRP), and reference signal received quality (reference signal received quality, RSRQ).

Network operation data collected by a core network element includes any one of a user plane throughput, a quantity of user plane sessions, central processing unit (central processing unit, CPU) usage of the core network element, and memory usage of the core network element.

Network operation data collected by a data communication device includes any one of a packet delay, a data packet jitter rate, and a data packet loss rate.

Network operation data collected by an optical communication device includes any one of receive optical power, transmit optical power, a quantity of received data packets, and a quantity of sent data packets.

It may be understood that a type of the network operation data is not limited in this application.

(2) Collection of network operation data at specific frequency

In embodiments of this application, "collection of network operation data at specific frequency" may also be understood as periodically collecting the network operation data.

For example, the frequency may be once every minute, and a base station may perform collection for the first time at 1:01 (that is, one past one), then perform collection for the second time at 1:02, then perform collection for the third time at 1:03, and so on.

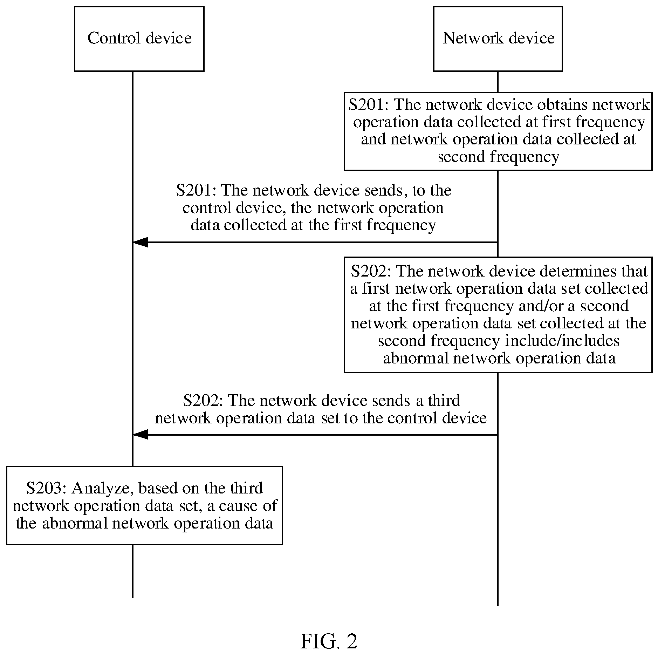

FIG. 2 shows a method 200 according to this application. The method 200 includes the following steps.

S201: A network device obtains network operation data collected at first frequency and network operation data collected at second frequency, and sends, to a control device, the network operation data collected at the first frequency. Correspondingly, the control device receives the network operation data collected at the first frequency.

The second frequency is higher than the first frequency.

The following describes "a network device obtains network operation data collected at first frequency and network operation data collected at second frequency".

Scenario 1:

The network device is any one of a base station, a core network element, an optical communication device, and a data communication device, and the control device is any one of an EMS, an NMS, and an OSS.

In this scenario, that "a network device obtains network operation data collected at first frequency and network operation data collected at second frequency" may be understood as: The network device collects the network operation data at the first frequency and the network operation data at the second frequency.

Scenario 2:

The network device is an EMS, and the control device is any one of an NMS and an OSS.

In this scenario, that "a network device obtains network operation data collected at first frequency and network operation data collected at second frequency" may be understood as any one of the following:

(1) The network device obtains network operation data collected by a base station at the first frequency and network operation data collected by the base station at the second frequency.

(2) The network device obtains network operation data collected by a core network element at the first frequency and network operation data collected by the core network element at the second frequency.

(3) The network device obtains network operation data collected by a data communication device at the first frequency and network operation data collected by the data communication device at the second frequency.

(4) The network device obtains network operation data collected by an optical communication device at the first frequency and network operation data collected by the optical communication device at the second frequency.

For ease of description, in this embodiment of this application, the base station, the core network element, the data communication device, and the optical communication device are collectively referred to as a "data collection device". In other words, the "data collection device" may be any one of the base station, the core network element, the data communication device, and the optical communication device.

In a manner, in the data collection device, collecting the network operation data at the first frequency and collecting the network operation data at the second frequency may be performed concurrently (or synchronously). In addition, in the data collection device, the network operation data collected at the first frequency and the network operation data collected at the second frequency are network operation data of a same type.

It may be understood that the data collection device may spontaneously collect the network operation data at the first frequency and the network operation data at the second frequency. Alternatively, the control device may indicate the data collection device to collect the network operation data at the first frequency and the network operation data at the second frequency.

In a manner, the network device may send, to the control device at third frequency, the network operation data collected at the first frequency. The third frequency is lower than or equal to the first frequency.

In other words, the network device may report, to the control device at frequency lower than the first frequency, the network operation data collected at the first frequency, to save resources and reduce power consumption of the network device.

In a possible case, in this embodiment of this application, when reporting the collected network operation data to the control device, the network device may further report, to the control device, a collection moment corresponding to the network operation data. For example, the network device reports (moment #1, network operation data #1), (moment #2, network operation data #2), and so on to the control device. Details are not described again in the following.

The network device may cache the network operation data collected at the second frequency into a buffer (or referred to as a buffer area). Certainly, the network device may alternatively store the network operation data collected at the second frequency in another storage medium (for example, in a hard disk, a magnetic disk, or a USB flash drive).

The following describes a caching process of the network device.

Case 1:

A maximum capacity of the buffer is a preset value. When a remaining capacity of the buffer is insufficient to store the network operation data collected at the second frequency, the network device may delete a part of the network operation data from the buffer. It may be understood that the maximum capacity of the buffer may be preconfigured in the network device, or may be specified in a protocol, or may be indicated by the control device to the network device. This is not limited in this application.

For example, the maximum capacity of the buffer is 10 KB, and the second frequency is once every minute (that is, collection is performed once every minute). The network device obtains data #1 collected at 1:01, and stores the data #1 in the buffer. The network device obtains data #2 collected at 1:02, and stores the data #2 in the buffer. The network device obtains data #3 collected at 1:03. If the remaining capacity of the buffer is insufficient to store the data #3, the network device may delete the data #1, and store the data #3 in the buffer.

Case 2:

The buffer may cache network operation data collected at the second frequency within preset duration. It may be understood that the preset duration may be preconfigured in the network device, or may be specified in a protocol, or may be indicated by the control device to the network device. This is not limited in this application.

For example, the preset duration is three minutes, and the second frequency is once every minute. The network device obtains data #1 collected at 1:01, and stores the data #1 in the buffer. The network device obtains data #2 collected at 1:02, and stores the data #2 in the buffer. The network device obtains data #3 collected at 1:03, and stores the data #3 in the buffer. The network device obtains data #4 collected at 1:04. Because the buffer can cache at most the network operation data collected at the second frequency within 3 minutes, the network device may delete the data #1, and store the data #4 in the buffer.

Case 3:

There is a maximum value of a quantity of pieces of data that can be cached in the buffer. It may be understood that the maximum value of the quantity of pieces of data that can be cached in the buffer may be preconfigured in the network device, or may be specified in a protocol, or may be indicated by the control device to the network device. This is not limited in this application.

For example, a maximum quantity of pieces of data that can be cached in the buffer is five (in other words, the buffer can cache a maximum of five pieces of data collected at the second frequency), and the second frequency is once every minute. The network device obtains data #1 collected at 1:01, and stores the data #1 in the buffer. By analogy, the network device obtains data #5 collected at 1:05, and stores the data #5 in the buffer. The network device obtains data #6 collected at 1:06. Because the buffer already caches five pieces of data, the network device may delete the data #1, and store the data #6 in the buffer.

S202: The network device sends a third network operation data set to the control device in response to determining that a first network operation data set collected at the first frequency and/or a second network operation data set collected at the second frequency include/includes abnormal network operation data. Correspondingly, the control device receives the third network operation data set from the network device.

Specifically, in S202, the network device may determine, in the following several manners, whether to send the third network operation data set to the control device.

Manner A:

The network device may check whether the first network operation data set includes abnormal network operation data. When the first network operation data set includes abnormal network operation data, the network device sends the third network operation data set to the control device.

Manner B:

The network device may check whether the second network operation data set includes abnormal network operation data. When the second network operation data set includes abnormal network operation data, the network device sends the third network operation data set to the control device.

Manner C:

The network device may check whether the first network operation data set and the second network operation data set include abnormal network operation data. When the first network operation data set or the second network operation data set includes abnormal network operation data, the network device sends the third network operation data set to the control device.

It may be understood that which manner in Manner A to Manner C specifically used by the network device may be determined by the network device, or may be preconfigured in the network device, or may be indicated by the control device.

For example, the control device may send first indication information to the network device, where the first indication information indicates the network device to check whether the first network operation data set and/or the second network operation data set include/includes abnormal network operation data. Correspondingly, the network device may check, based on the first indication information, whether the first network operation data set and/or the second network operation data set include/includes abnormal network operation data.

The third network operation data set includes network operation data collected at the second frequency before a moment of an abnormality, where the moment of the abnormality is a collection moment corresponding to the abnormal network operation data.

In a possible case, in this embodiment of this application, the "collection moment" and a "generation moment" of the network operation data may not be strictly distinguished, and the two may be replaced with each other. In other words, in this embodiment of this application, the "collection moment" corresponding to the network operation data may be considered to be the same as the "generation moment" corresponding to the network operation data. Details are not described again in the following.

The following describes the third network operation data set by using several examples. In a possible case, the third network operation data set includes a correspondence between the network operation data and the collection moment.

Example 1:

The third network operation data set includes network operation data collected at the second frequency within a first preset time range before the moment of the abnormality.

According to this embodiment of this application, when an abnormality occurs in the collected network operation data, the network device may send, to the control device, the network operation data collected at the second frequency in a period of time before the moment of the abnormality. Compared with sending, to the control device, all network operation data collected at the second frequency before the moment of the abnormality, resource overheads in a reporting process can be reduced. For the beneficial effects, details are not described again in the following.

Optionally, the third network operation data set may further include network operation data collected at the second frequency within a second preset time range after the moment of the abnormality.

According to this embodiment of this application, when the abnormality occurs in the collected network operation data, the network device may send, to the control device, the network operation data collected at the second frequency before and after the moment of the abnormality, to help the control device analyze in more detail a cause of the abnormality in the network operation data. For the beneficial effects, details are not described again in the following.

For example, if the first preset time range is 10s, the second preset time range is 5s, and the moment of the abnormality is a 30th second, the third network operation data set includes network operation data collected at the second frequency from a 20th second to the 30th second, and optionally, may further include network operation data collected at the second frequency from the 30th second to a 35th second.

It may be understood that sizes of the first preset time range and the second preset time range may be preconfigured in the network device, or may be specified in a protocol, or may be indicated by the control device to the network device. This is not limited in this application.

Example 2:

The third network operation data set includes network operation data that is collected at the second frequency before the moment of the abnormality and that is cached in the buffer.

Optionally, the third network operation data set may further include network operation data that is collected at the second frequency after the moment of the abnormality and that is cached in the buffer.

It may be understood that in this embodiment of this application, the abnormal network operation data is network operation data that satisfies an abnormality condition. The abnormality condition may be preconfigured in the network device, or may be specified in a protocol, or may be indicated by the control device to the network device. This is not limited in this application. The following describes the abnormality condition by using several examples.

Example A:

The abnormality condition may be that a value of the network operation data falls within a preset first abnormality range. The first abnormality range may be determined based on one or more thresholds.

Example B:

The abnormality condition may be that a value obtained by preprocessing the network operation data falls within a preset second abnormality range. The second abnormality range may be determined based on one or more thresholds.

It may be understood that there may be a plurality of manners of preprocessing the network operation data.

In a possible case, for the preprocessing manner, refer to Formula 1: $\dfrac{|a-b|}{b}$.

"a" represents a value of network operation data collected at a moment (for example, a moment #A), and "b" represents an average value of network operation data collected within a preset time range before the moment #A (for example, 10s before the moment #A). Alternatively, "b" represents an average value of network operation data cached in the buffer before the moment #A.

If a value obtained through calculation according to Formula 1 falls within a preset second abnormality range #1, the network operation data collected at the moment #A is abnormal network operation data.

In another possible case, for the preprocessing manner, refer to Formula 2: $|a - b|$.

For meanings of "a" and "b", refer to Formula 1. If a value obtained through calculation according to Formula 2 falls within a preset second abnormality range #2, the network operation data collected at the moment #A is abnormal network operation data.

Example C:

When network operation data collected at a moment (for example, a moment #A) is greater than a maximum value of network operation data collected within a preset time range before the moment #A, the network operation data collected at the moment #A is abnormal network operation data.

Example D:

When network operation data collected at a moment (for example, a moment #A) is less than a minimum value of network operation data collected within a preset time range before the moment #A, the network operation data collected at the moment #A is abnormal network operation data.

Optionally, before the network device sends the third network operation data set to the control device, the network device may further determine whether resource usage (for example, CPU usage) of the network device is less than a preset threshold. The preset threshold may be preconfigured in the network device, or may be specified in a protocol, or may be indicated by the control device to the network device. This is not limited.

In other words, when the first network operation data set and/or the second network operation data set include/includes abnormal network operation data, and the resource usage of the network device is less than the preset threshold, the network device sends the third network operation data set to the control device; otherwise, the network device does not send the third network operation data set to the control device.

According to this embodiment of this application, when the resource usage of the network device is greater than the preset threshold, the network device does not send the third network operation data set to the control device, to avoid a plurality of problems (for example, frame freezing, overheating, and efficiency reduction) caused by overload of the network device. For the beneficial effects, details are not described again in the following.

In addition, optionally, after sending the third network operation data set to the control device, the network device may delete the third network operation data set from the buffer, or may clear data in the buffer.

S203: The control device analyzes, based on the third network operation data set, a cause of the abnormal network operation data.

It may be understood that, in this embodiment of this application, when the control device analyzes the cause of the abnormal network operation data is not limited.

In a manner, when the control device performs S203 is determined by a person.

For example, time (for example, 6 p.m. every day) may be set, and the network operation data reported by the network device to the control device is checked by a person. If it is found that the network operation data includes the abnormal network operation data, the control device may analyze, based on the third network operation data set, the cause of the abnormal network operation data.

In another manner, the control device may spontaneously perform S203.

For example, in response to determining, by the control device, that the network operation data collected at the first frequency includes the abnormal network operation data, the control device analyzes, based on the third network operation data set, the cause of the abnormal network operation data.

For another example, the third network operation data set further includes the abnormal network operation data. In response to determining, by the control device, that the third network operation data set includes the abnormal network operation data, the control device analyzes, based on the third network operation data set, the cause of the abnormal network operation data.

The following describes, by using several examples, the cause of the abnormal network operation data.

Example 1:

If the network operation data collected at the first frequency and the network operation data collected at the second frequency are a base station energy consumption value, an energy consumption data analysis unit in the control device may analyze, based on the third network operation data set, a cause of an abnormality in the base station energy consumption value.

For example, the second frequency is once every five minutes, and data included in the third network operation data set is shown in the following table.

| Collection moment | Value/kWh |
|---|---|
| 9:05 | 0.1 |
| 9:10 | 0.1 |
| 9:15 | 0.1 |
| 9:20 | 0.4 |
| 9:25 | 0.1 |
| 9:30 | 0.1 |

The control device analyzes, based on the third network operation data set, that a cause of an abnormality in the base station energy consumption value at 9:20 is: a user with heavy load (or referred to as a heavy-load user) exists at 9:20, resulting in that the abnormality occurs in the base station energy consumption value at 9:20.

Example 2:

If the network operation data collected at the first frequency and the network operation data collected at the second frequency are receive optical power, the control device may analyze, based on the third network operation data set, a cause of an abnormality in the receive optical power.

For example, the first frequency is once every minute, the second frequency is once every 10 seconds, and receive optical power collected at the first frequency at 9:02 is abnormal. Data included in the third network operation data set is shown in the following table, where 9:01: 10 indicates nine o'clock one minute ten seconds.

| Collection moment | Value |
| --- | --- |
| 9:01:10 | 2954 |
| 9:01:20 | 1011 |
| 9:01:30 | 587 |
| 9:01:40 | 265 |
| 9:01:50 | 70 |
| 9:02 | 1 |

The control device analyzes, based on an attenuation curve feature of the receive optical power in the third network operation data set, that a cause of an abnormality in the receive optical power at 9:02 is that an optical fiber connector of an optical communication device is pulled out.

According to this embodiment of this application, the network device may obtain the network operation data collected at the first frequency and the network operation data collected at the second frequency.

When the collected network operation data is normal, the network device sends, to the control device, the network operation data collected at the first frequency. Therefore, compared with Mode 1 in BACKGROUND, the solution in this application can reduce communication pressure between the network device and the control device, to save resources.

When the abnormality occurs in the collected network operation data, the network device sends, to the control device, the network operation data collected at the second frequency before the moment of the abnormality. Therefore, compared with Mode 2 in BACKGROUND, the solution in this application helps the control device analyze in more detail the cause of the abnormality in the network operation data.

In conclusion, in the method 200 in this application, a mode in which the network device reports the network operation data to the control device is flexible, and is no longer fixed.

In addition, in another implementation, the network device may obtain the network operation data collected at the first frequency and the network operation data collected at the second frequency, however, different from the method 200, the network device no longer reports, to the control device, the data collected at the first frequency. When the first network operation data set collected at the first frequency and/or the second network operation data set collected at the second frequency include/includes abnormal network operation data, the network device sends the third network operation data set to the control device.

The following describes a method 300 and a method 400 provided in this application. In the method 300 and the method 400, the network device is a data collection device, and the control device is any one of an EMS, an NMS, and an OSS. When the network device is the data collection device and the control device is the NMS or the OSS, the network device and the control device may exchange information via an EMS.

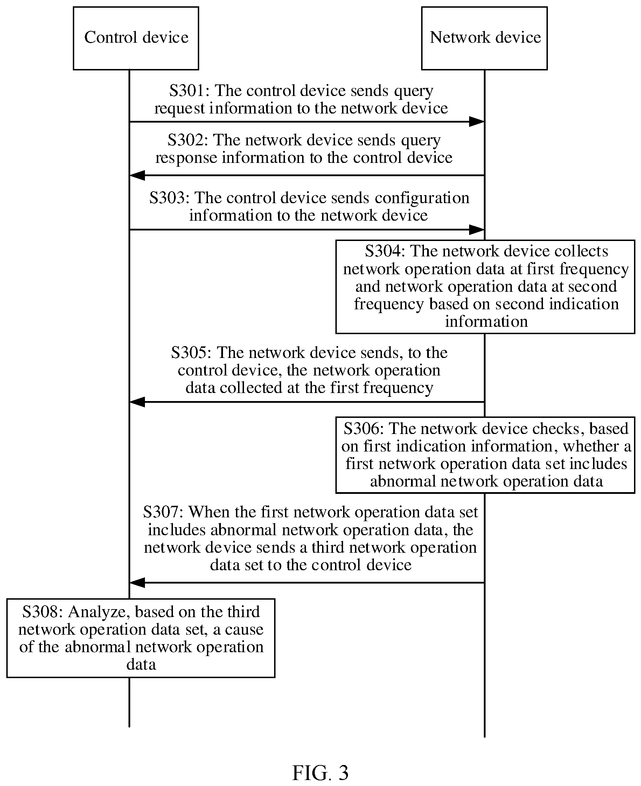

FIG. 3 shows a method 300 provided in this application. In the method 300, a network device checks whether a first network operation data set collected at first frequency includes abnormal network operation data. Specifically, the method 300 includes the following steps.

S301: A control device sends query request information to the network device. Correspondingly, the network device receives the query request information from the control device.

For example, the control device may send a frequency query message to the network device, where the frequency query message includes the query request information.

The query request information is used to request the network device to provide collection frequency supported by the network device.

Optionally, the query request information may be further used to request the network device to provide reporting frequency supported by the network device.

The query request information may further include information about a type of to-be-queried data. It may be understood that the data type is not limited in this application.

S302: The network device sends query response information to the control device based on the query request information. Correspondingly, the control device receives the query response information from the network device.

For example, the network device may send a frequency query response message to the control device, where the frequency query response message includes the query response information.

The query response information includes first frequency and second frequency. Both the first frequency and the second frequency are collection frequency supported by the network device. Optionally, a quantity of pieces of collection frequency supported by the network device and included in the query response information may be greater than 2.

Optionally, the query response information may further include at least one piece of reporting frequency supported by the network device. The at least one piece of reporting frequency includes third frequency.

In addition, in another possible implementation, in S301, the control device sends query request information to the network device, where the query request information is used to query whether the network device supports a plurality of pieces of collection frequency for a type of network operation data (or whether the network device has a capability of performing collection based on the plurality of pieces of frequency); and in S302, the network device sends query response information to the control device, where the query response information indicates whether the network device supports the plurality of pieces of collection frequency for the type of network operation data.

S303: The control device sends configuration information to the network device. Correspondingly, the network device receives the configuration information.

For example, the control device may send a measurement task creation message to the network device, where the measurement task creation message includes the configuration information.

Specifically, the control device may determine, based on the query response information in S302, whether the network device supports the plurality of pieces of collection frequency for the type of network operation data. When the network device supports the plurality of pieces of collection frequency, the control device sends the configuration information to the network device.

The configuration information may include the following information:

first indication information, second indication information, data type information of the network operation data, and information about an abnormality condition based on which whether the network operation data is abnormal is determined.

Optionally, the configuration information may further include information about a first preset time range, information about a second preset time range, third indication information, and information about a preset threshold related to resource usage. For related descriptions of the first preset time range and the second preset time range, refer to Example 1 in S202.

It may be understood that the control device may send the configuration information to the network device by using one or more messages.

The first indication information indicates the network device to check whether the first network operation data set collected at the first frequency includes abnormal network operation data.

The second indication information indicates the network device to collect network operation data at the first frequency and the second frequency. Optionally, the second indication information may include the first frequency and the second frequency.

It may be understood that, when the quantity of pieces of collection frequency supported by the network device is greater than 2, the control device may select two pieces of collection frequency from the plurality of pieces of collection frequency. For example, the selected two pieces of collection frequency may be the first frequency and the second frequency, and then the control device sends the second indication information to the network device.

The third indication information indicates the network device to send, to the control device at the third frequency, the network operation data collected at the first frequency, where the third frequency is lower than or equal to the first frequency.

For example, a data type of the network operation data may be a base station energy consumption value, the first frequency may be once every five minutes, the second frequency may be once every minute, and the abnormality condition based on which whether the network operation data is abnormal is determined may be shown in Example A in S202. In other words, if a base station energy consumption value collected at a moment falls within a first abnormality range #1, the base station energy consumption value at the moment is abnormal.

For example, a data type of the network operation data may be a user call drop rate, the first frequency may be once every 60 minutes, the second frequency may be once every five minutes, and the abnormality condition based on which whether the network operation data is abnormal is determined may be shown in Example A in S202. In other words, if a user call drop rate collected at a moment falls within a first abnormality range #2, the user call drop rate at the moment is abnormal.

S304: The network device collects the network operation data at the first frequency and the network operation data at the second frequency based on the second indication information.

The network device may cache the network operation data collected at the second frequency into a buffer. For the data caching process, refer to the descriptions of S201. Details are not described herein again.

S305: The network device sends, to the control device, the network operation data collected at the first frequency. Correspondingly, the control device receives the network operation data collected by the network device at the first frequency.

In a possible case, the network device may send, to the control device at the third frequency based on the third indication information, the network operation data collected at the first frequency. The third frequency may be the same as or lower than the first frequency. In other words, the network device may periodically send, to the control device, the network operation data collected at the first frequency.

In another possible case, the network device may a periodically send, to the control device, the network operation data collected at the first frequency. For example, the network device may cache the network operation data collected at the first frequency, and send, to the control device when a buffer area is full, the network operation data collected at the first frequency.

S306: The network device checks, based on the first indication information, whether the first network operation data set includes abnormal network operation data.

For the abnormality condition based on which the network device determines whether network operation data collected at a moment is abnormal, refer to the descriptions of S202.

The following describes manners in which the network device checks whether the first network operation data set includes abnormal network operation data.

Manner 1:

The third frequency is the same as the first frequency. Each time the network device sends, to the control device, network operation data collected at the first frequency at a moment, the network device may determine whether the network operation data at the moment is abnormal network operation data.

For example, the first frequency may be once every five minutes, and the third frequency is also once every five minutes. The network device obtains data #1 through collection at 1:05, and the network device may determine, when sending the data #1 to the control device, whether the data #1 is normal; the network device obtains data #2 through collection at 1:10, and the network device may determine, when sending the data #2 to the control device, whether the data #2 is normal; and so on.

Manner 2:

The third frequency is lower than the first frequency. Each time the network device sends, to the control device, one or more pieces of network operation data collected at the first frequency, the network device may determine whether the one or more pieces of network operation data include abnormal network operation data.

For example, the first frequency may be once every five minutes, and the third frequency may be once every 15 minutes. The network device obtains data #1 through collection at 1:05, the network device obtains data #2 through collection at 1:10, and the network device obtains data #3 through collection at 1:15. When sending the data #1, the data #2, and the data #3 to the control device, the network device may determine whether the data #1, the data #2, and the data #3 include abnormal network operation data.

S307: When the first network operation data set includes the abnormal network operation data, the network device sends a third network operation data set to the control device. Correspondingly, the control device receives the third network operation data set from the network device.

For descriptions of the third network operation data set, refer to S202. Details are not described herein again.

Optionally, before the network device sends the third network operation data set to the control device, the network device may further determine whether resource usage of the network device is less than a preset threshold. When the resource usage of the network device is less than the preset threshold, the network device sends the third network operation data set to the control device; otherwise, the network device does not send the third network operation data set to the control device.

S308: The control device analyzes, based on the third network operation data set, a cause of the abnormal network operation data.

For the process, refer to S203. Details are not described herein again.

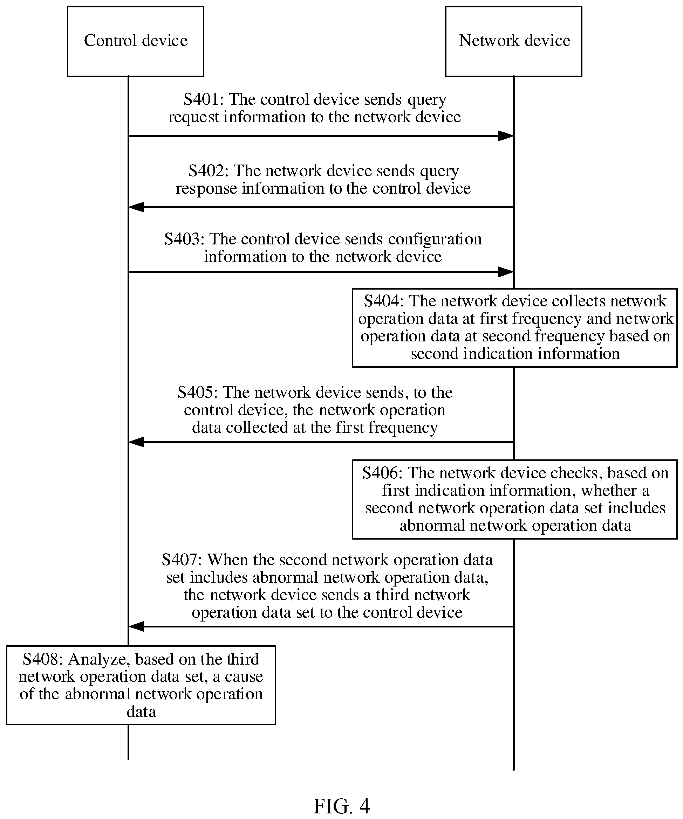

FIG. 4 shows a method 400 provided in this application. Different from the method 300, in the method 400, a network device checks whether a second network operation data set collected at second frequency includes abnormal network operation data. Specifically, the method 400 includes the following steps.

S401: A control device sends query request information to the network device. Correspondingly, the network device receives the query request information from the control device.

For the process, refer to the descriptions of S301. Details are not described herein again.

S402: The network device sends query response information to the control device based on the query request information. Correspondingly, the control device receives the query response information from the network device.

For the process, refer to the descriptions of S302. Details are not described herein again.

S403: The control device may send configuration information to the network device. Correspondingly, the network device receives the configuration information.

The configuration information may include the following information:

first indication information, second indication information, data type information of network operation data, and information about an abnormality condition based on which whether the network operation data is abnormal is determined.

Optionally, the configuration information may further include information about a first preset time range, information about a second preset time range, third indication information, and information about a preset threshold related to resource usage.

It may be understood that, in S403, the control device may send the configuration information to the network device by using one or more messages.

Different from S303, in S403, the first indication information indicates the network device to check whether the second network operation data set collected at the second frequency includes abnormal network operation data.

For related descriptions of the second indication information, the third indication information, the data type information of the network operation data, the information about the abnormality condition based on which whether the network operation data is abnormal is determined, the information about the first preset time range, the information about the second preset time range, and the information about the preset threshold related to the resource usage, refer to S303. Details are not described herein again.

S404: The network device collects network operation data at first frequency and network operation data at second frequency based on the second indication information.

The network device may cache the network operation data collected at the second frequency into a buffer. For the data caching process, refer to the descriptions of S201.

S405: The network device sends, to the control device, the network operation data collected at the first frequency. Correspondingly, the control device receives the network operation data collected by the network device at the first frequency.

For the process, refer to the descriptions of S305.

S406: The network device checks, based on the first indication information, whether the second network operation data set includes abnormal network operation data.

A manner in which the network device checks whether the second network operation data set includes abnormal network operation data includes but is not limited to the following several manners.

Manner 1:

After obtaining network operation data through collection at the second frequency each time, the network device determines whether network operation data collected this time is normal.

For example, the second frequency may be once every minute. The network device obtains data #1 through collection at 1:01, and the network device determines whether the data #1 is normal. The network device obtains data #2 through collection at 1:02, and the network device determines whether the data #2 is normal. The network device obtains data #3 through collection at 1:03, and the network device determines whether the data #3 is normal.

Manner 2:

After obtaining a plurality of pieces of network operation data through collection at the second frequency, the network device determines whether abnormal network operation data exists in the plurality of pieces of network operation data.

For example, the second frequency may be once every minute. The network device obtains data #1 through collection at 1:01, the network device obtains data #2 through collection at 1:02, and the network device obtains data #3 through collection at 1:03. After obtaining the three pieces of network operation data, the network device determines whether the data #1, the data #2, and the data #3 include abnormal network operation data.

S407: When the second network operation data set includes the abnormal network operation data, the network device sends a third network operation data set to the control device. Correspondingly, the control device receives the third network operation data set from the network device.

For descriptions of the third network operation data set, refer to S202. Details are not described herein again. In addition, in S407, the third network operation data set further includes abnormal network operation data corresponding to a moment of an abnormality.

Optionally, before the network device sends the third network operation data set to the control device, the network device may further determine whether resource usage of the network device is less than a preset threshold. When the resource usage of the network device is less than the preset threshold, the network device sends the third network operation data set to the control device; otherwise, the network device does not send the third network operation data set to the control device.

S408: The control device analyzes, based on the third network operation data set, a cause of the abnormal network operation data.

For the process, refer to S203. Details are not described herein again.

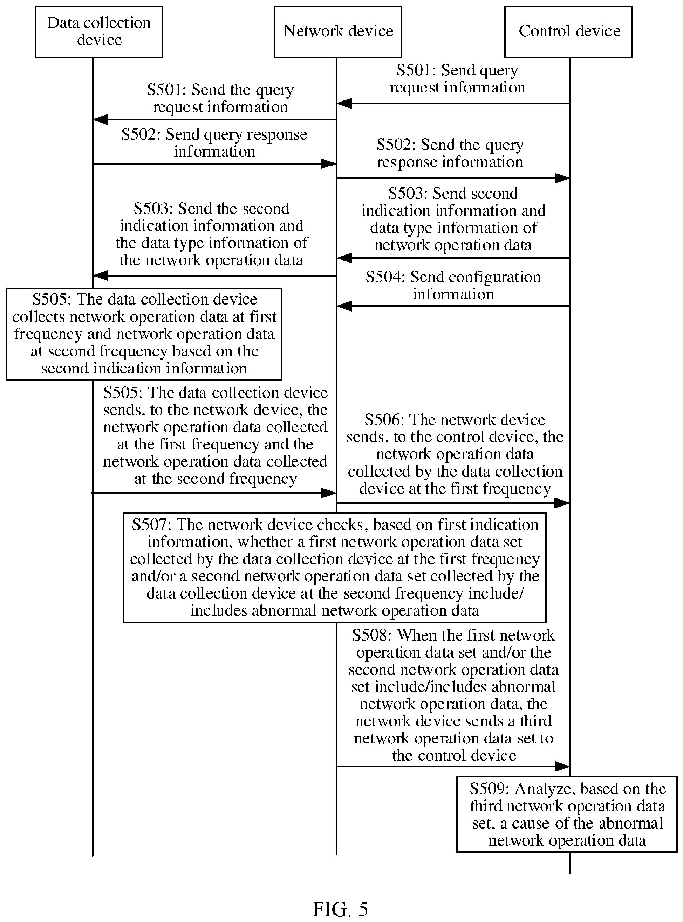

FIG. 5 shows a method 500 according to this application. In the method 500, a network device is an EMS, and a control device is an NMS or an OSS. Specifically, the method 500 includes the following steps.

S501: The control device sends query request information to a data collection device via the network device. Correspondingly, the data collection device receives the query request information from the control device.

For descriptions of the query request information, refer to S301.

S502: The data collection device sends query response information to the control device via the network device. Correspondingly, the control device receives the query response information from the data collection device.

For descriptions of the query response information, refer to S302.

S503: The control device sends second indication information and data type information of network operation data to the data collection device via the network device. Correspondingly, the data collection device receives the second indication information and the data type information of the network operation data from the control device.

The second indication information indicates the data collection device to collect network operation data at first frequency and second frequency. Optionally, the second indication information may include the first frequency and the second frequency.

S504: The control device sends configuration information to the network device. Correspondingly, the network device receives the configuration information.

The configuration information may include the following information:

first indication information: information about an abnormality condition based on which whether the network operation data is abnormal is determined.

Optionally, the configuration information may further include information about a first preset time range, information about a second preset time range, third indication information, and information about a preset threshold related to resource usage. For related descriptions of the first preset time range and the second preset time range, refer to Example 1 in S202.

The first indication information indicates the network device to check whether a first network operation data set collected by the data collection device at the first frequency and/or a second network operation data set collected by the data collection device at the second frequency include/includes abnormal network operation data.

The third indication information indicates the network device to send, to the control device at third frequency, the network operation data collected by the data collection device at the first frequency, where the third frequency is lower than or equal to the first frequency.

S505: The data collection device collects the network operation data at the first frequency and the network operation data at the second frequency based on the second indication information, and sends, to the network device, the network operation data collected at the first frequency and the network operation data collected at the second frequency. Correspondingly, the network device receives the network operation data collected by the data collection device at the first frequency and the network operation data collected by the data collection device at the second frequency.

S506: The network device sends, to the control device, the network operation data collected by the data collection device at the first frequency. Correspondingly, the control device receives the network operation data collected by the data collection device at the first frequency.

In a possible case, the network device may send, to the control device at the third frequency based on the third indication information, the network operation data collected by the data collection device at the first frequency.

In another possible case, the network device may aperiodically send, to the control device, the network operation data collected by the data collection device at the first frequency.

S507: The network device checks, based on the first indication information, whether the first network operation data set collected by the data collection device at the first frequency and/or the second network operation data set collected by the data collection device at the second frequency include/includes abnormal network operation data.

S508: When the first network operation data set and/or the second network operation data set include/includes the abnormal network operation data, the network device sends a third network operation data set to the control device. Correspondingly, the control device receives the third network operation data set from the network device.

For descriptions of the third network operation data set, refer to S202. Details are not described herein again.

In addition, optionally, before the network device sends the third network operation data set to the control device, the network device may further determine whether resource usage of the network device is less than a preset threshold.

S509: The control device analyzes, based on the third network operation data set, a cause of the abnormal network operation data.

For the process, refer to S203. Details are not described herein again.

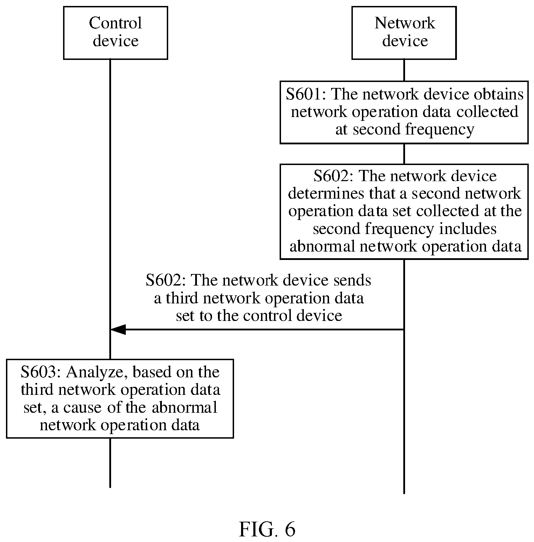

FIG. 6 shows a method 600 according to this application. The method 600 includes the following steps.

S601: A network device obtains network operation data collected at second frequency.

The following describes "a network device obtains network operation data collected at second frequency".

Scenario 1:

The network device is a data collection device, and a control device is any one of an EMS, an NMS, and an OSS.

In this scenario, that "a network device obtains network operation data collected at second frequency" may be understood as: The data collection device collects the network operation data at the second frequency. In this scenario, the data collection device does not collect network operation data at first frequency.

Scenario 2:

The network device is an EMS, and a control device is any one of an NMS and an OSS.

In this scenario, that "a network device obtains network operation data collected at second frequency" may be understood as: The network device obtains network operation data collected by a data collection device at the second frequency. In this scenario, the data collection device does not collect network operation data at first frequency.

Both the first frequency and the second frequency are network operation data collection frequency supported by the data collection device, and the second frequency is higher than the first frequency.

In a manner, the data collection device may spontaneously collect the network operation data at the second frequency, and does not collect the network operation data at the first frequency.

In another manner, the control device may indicate the data collection device to collect the network operation data at the second frequency. The data collection device collects the network operation data at the second frequency based on the indication of the control device, but does not collect the network operation data at the first frequency.

The network device may cache the obtained network operation data collected at the second frequency into a buffer. For the data caching process, refer to related descriptions of S201. Details are not described herein again.

S602: The network device sends a third network operation data set to the control device in response to determining that a second network operation data set collected at the second frequency includes abnormal network operation data. Correspondingly, the control device receives the third network operation data set from the network device.

For descriptions of the third network operation data set, refer to S202. Details are not described herein again. In addition, in S602, the third network operation data set further includes abnormal network operation data corresponding to a moment of the abnormality.

In this embodiment of this application, the abnormal network operation data is network operation data that satisfies an abnormality condition. For descriptions of the abnormality condition, refer to S202. Details are not described herein again.

Optionally, before the network device sends the third network operation data set to the control device, the network device may further determine whether resource usage of the network device is less than a preset threshold.

In other words, when the second network operation data set includes abnormal network operation data, and the resource usage of the network device is less than the preset threshold, the network device sends the third network operation data set to the control device; otherwise, the network device does not send the third network operation data set to the control device.

S603: The control device analyzes, based on the third network operation data set, a cause of the abnormal network operation data.

For the process, refer to S203. Details are not described herein again.

According to this embodiment of this application, the data collection device only collects the network operation data at the second frequency, and does not collect the network operation data at the first frequency. Compared with the method 200 to the method 500, energy consumption of the data collection device is further reduced.

When the collected network operation data is normal, the network device does not send, to the control device, the network operation data collected at the second frequency. Therefore, compared with Mode 1 in BACKGROUND, the solution in this application can reduce communication pressure between the network device and the control device, to save resources.

When an abnormality occurs in the collected network operation data, the network device sends, to the control device, network operation data collected at the second frequency before the moment of the abnormality. Therefore, compared with Mode 2 in BACKGROUND, the solution in this application helps the control device analyze in more detail the cause of the abnormality in the network operation data.

In conclusion, in the method 600 in this application, a mode in which the network device reports the network operation data to the control device is flexible, and is no longer fixed.

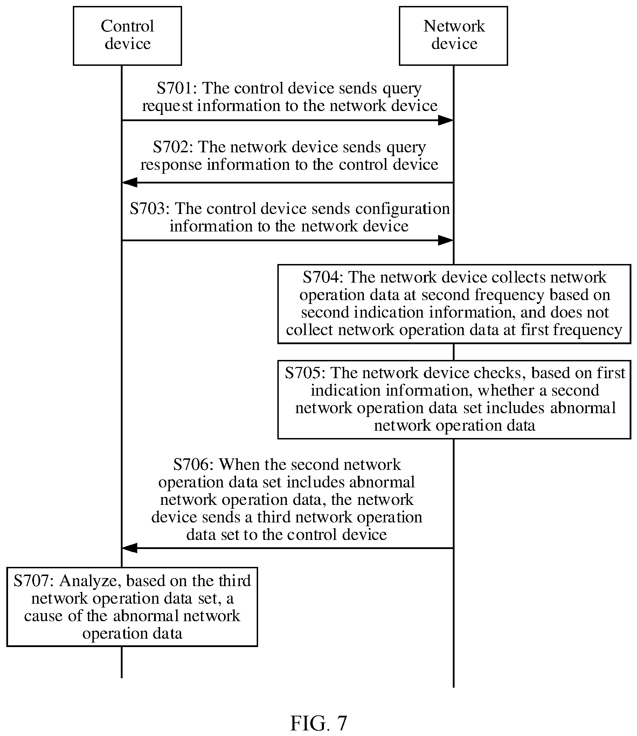

FIG. 7 shows a method 700 according to this application. In the method 700, a network device is a data collection device, and a control device is any one of an EMS, an NMS, and an OSS. When the network device is the data collection device and the control device is the NMS or the OSS, the network device and the control device may exchange information via an EMS. Specifically, the method 700 includes the following steps.

S701: The control device sends query request information to the network device. Correspondingly, the network device receives the query request information from the control device.

The query request information is used to request the network device to provide collection frequency supported by the network device.

The query request information may further include information about a type of to-be-queried data.

S702: The network device sends query response information to the control device based on the query request information. Correspondingly, the control device receives the query response information from the network device.

The query response information includes first frequency and second frequency. Optionally, a quantity of pieces of collection frequency supported by the network device and included in the query response information may be greater than 2.

S703: The control device may send configuration information to the network device. Correspondingly, the network device receives the configuration information.

The configuration information may include the following information:

first indication information, second indication information, data type information of network operation data, and information about an abnormality condition based on which whether the network operation data is abnormal is determined.

Optionally, the configuration information may further include information about a first preset time range, information about a second preset time range, and information about a preset threshold related to resource usage.

It may be understood that, in S703, the control device may send the configuration information to the network device by using one or more messages.

The first indication information indicates the network device to check whether a second network operation data set collected at the second frequency includes abnormal network operation data.

In the method 700, the second indication information indicates the network device to collect the network operation data at the second frequency. Optionally, the second indication information may include the second frequency.

In other words, the control device may select the second frequency from the first frequency and the second frequency, and send the second indication information to the network device.

For example, a data type of the network operation data may be RSRP, the first frequency may be once every five seconds (in other words, collection is performed once every five seconds), the second frequency may be once every second, and an abnormality condition based on which whether the network operation data is abnormal may be shown in Example B in S202. In other words, if a value obtained by preprocessing RSRP at a moment falls within a second abnormality range, the RSRP at the moment is abnormal. For example, for the preprocessing manner, refer to Formula 1.

S704: The network device collects the network operation data at the second frequency based on the second indication information, and does not collect network operation data at the first frequency.

The network device may cache the network operation data collected at the second frequency into a buffer. For details of the data caching process, refer to the descriptions of S201.

S705: The network device checks, based on the first indication information, whether the second network operation data set includes abnormal network operation data.

For the abnormality condition based on which the network device determines whether network operation data collected at a moment is abnormal, refer to the descriptions of S202.

For a manner in which the network device checks whether the second network operation data set includes abnormal network operation data, refer to the descriptions of S406.

S706: When the second network operation data set includes the abnormal network operation data, the network device sends a third network operation data set to the control device. Correspondingly, the control device receives the third network operation data set from the network device.

For descriptions of the third network operation data set, refer to S202. Details are not described herein again.

Optionally, before the network device sends the third network operation data set to the control device, the network device may further determine whether resource usage of the network device is less than a preset threshold. When the resource usage of the network device is less than the preset threshold, the network device sends the third network operation data set to the control device; otherwise, the network device does not send the third network operation data set to the control device.

S707: The control device analyzes, based on the third network operation data set, a cause of the abnormal network operation data.

For the process, refer to S203. Details are not described herein again.

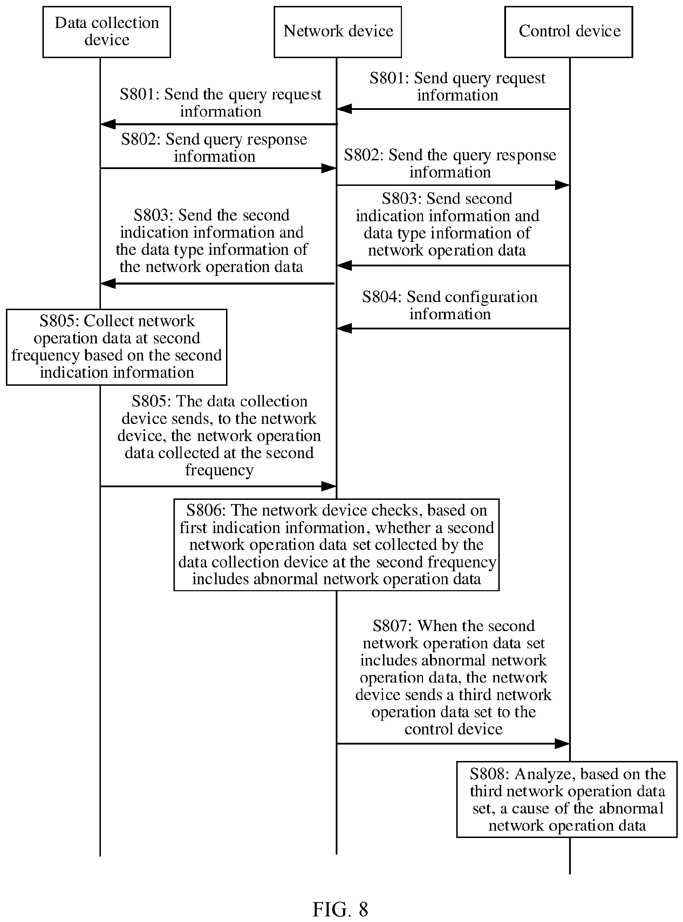

FIG. 8 shows a method 800 according to this application. In the method 800, a network device is an EMS, and a control device is any one of an NMS and an OSS. Specifically, the method 800 includes the following steps.

S801: The control device sends query request information to a data collection device via the network device. Correspondingly, the data collection device receives the query request information from the control device.

For descriptions of the query request information, refer to S301.

S802: The data collection device sends query response information to the control device via the network device. Correspondingly, the control device receives the query response information from the data collection device.

For descriptions of the query response information, refer to S302.

S803: The control device sends second indication information and data type information of network operation data to the data collection device via the network device. Correspondingly, the data collection device receives the second indication information and the data type information of the network operation data from the control device.

The second indication information indicates the data collection device to collect network operation data at second frequency. Optionally, the second indication information may include the second frequency.

S804: The control device sends configuration information to the network device. Correspondingly, the network device receives the configuration information.

The configuration information may include the following information:

first indication information: information about an abnormality condition based on which whether the network operation data is abnormal is determined.

Optionally, the configuration information may further include information about a first preset time range, information about a second preset time range, and information about a preset threshold related to resource usage. For related descriptions of the first preset time range and the second preset time range, refer to Example 1 in S202.

The first indication information indicates the network device to check whether a second network operation data set collected by the data collection device at the second frequency includes abnormal network operation data.

S805: The data collection device collects the network operation data at the second frequency based on the second indication information, and sends, to the network device, the network operation data collected at the second frequency. Correspondingly, the network device receives the network operation data collected by the data collection device at the second frequency.

The data collection device does not collect network operation data at first frequency.

S806: The network device checks, based on the first indication information, whether the second network operation data set collected by the data collection device at the second frequency includes abnormal network operation data.

S807: When the second network operation data set includes the abnormal network operation data, the network device sends a third network operation data set to the control device. Correspondingly, the control device receives the third network operation data set from the network device.

For descriptions of the third network operation data set, refer to S202. Details are not described herein again.

In addition, optionally, before the network device sends the third network operation data set to the control device, the network device may further determine whether resource usage of the network device is less than a preset threshold.

S808: The control device analyzes, based on the third network operation data set, a cause of the abnormal network operation data.

For the process, refer to S203. Details are not described herein again.

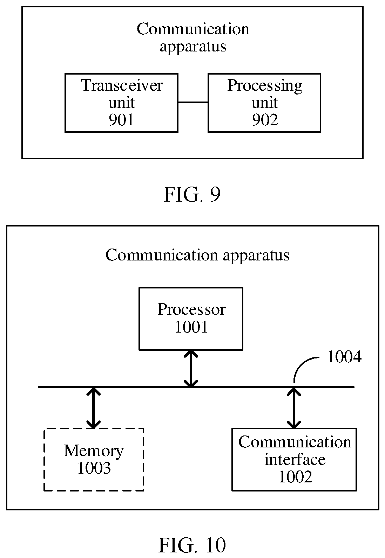

FIG. 9 shows a communication apparatus according to an embodiment of this application. The communication apparatus includes a transceiver unit 901 and a processing unit 902.

The transceiver unit 901 may be configured to implement a corresponding information receiving and sending function. The transceiver unit 901 may also be referred to as a communication interface or a communication unit. The processing unit 902 may be configured to perform a processing operation.

For example, the apparatus further includes a storage unit. The storage unit may be configured to store instructions and/or data. The processing unit 902 may read the instructions and/or the data in the storage unit, so that the apparatus implements actions of the apparatus in the foregoing method embodiments.

In a first implementation, the apparatus may be the network device in the foregoing embodiments, or may be a component (for example, a chip) of the network device. The transceiver unit and the processing unit may be configured to implement related operations of the network device.

For example, the transceiver unit may be configured to perform an operation of sending the network operation data collected at the first frequency to the control device in S201, and an operation of sending a third network operation data set to the control device in S202. The processing unit may be configured to perform an operation of collecting network operation data at first frequency and collecting network operation data at second frequency in S201, and an operation of determining that a first network operation data set and/or a second network operation data set include/includes abnormal network operation data in S202.

For another example, the transceiver unit may be configured to perform an operation of receiving the query request information in S301, an operation of sending query response information in S302, an operation of sending the network operation data collected at the first frequency in S305, and an operation of sending a third network operation data set in S307. The processing unit may be configured to perform S304 and S306.

For another example, the transceiver unit may be configured to perform an operation of receiving the query request information in S401, an operation of sending query response information in S402, an operation of sending the network operation data collected at the first frequency in S405, and an operation of sending a third network operation data set in S407. The processing unit may be configured to perform S404 and S406.

For another example, the transceiver unit may be configured to perform an operation of receiving the configuration information in S504, an operation of sending the network operation data collected by the data collection device at the first frequency in S506, and an operation of sending the third network operation data set in S508. The processing unit may be configured to perform S507.

For another example, the transceiver unit may be configured to perform an operation of sending the third network operation data set to the control device in S602. The processing unit may be configured to perform an operation of determining that the second network operation data set includes abnormal network operation data in S602.

For another example, the transceiver unit may be configured to perform an operation of receiving the query request information in S701, an operation of sending query response information in S702, and an operation of sending a third network operation data set in S706. The processing unit may be configured to perform S704 and S705.

For another example, the transceiver unit may be configured to perform an operation of receiving the configuration information in S804 and an operation of sending a third network operation data set in S807. The processing unit may be configured to perform S806.

In a second implementation, the apparatus may be the control device in the foregoing embodiments, or may be a component (for example, a chip) of the control device. The transceiver unit and the processing unit may be configured to implement related operations of the control device.

For example, the transceiver unit may be configured to perform an operation of receiving the network operation data collected at the first frequency in S201 and an operation of receiving the third network operation data set in S202. The processing unit may be configured to perform S203.

For another example, the transceiver unit may be configured to perform an operation of sending query request information in S301, an operation of receiving the query response information in S302, an operation of receiving the network operation data collected at the first frequency in S305, and an operation of receiving the third network operation data set in S307. The processing unit may be configured to perform S308.

For another example, the transceiver unit may be configured to perform an operation of sending query request information in S401, an operation of receiving the query response information in S402, an operation of receiving the network operation data collected at the first frequency in S405, and an operation of receiving the third network operation data set in S407. The processing unit may be configured to perform S408.

For another example, the transceiver unit may be configured to perform an operation of sending configuration information in S504, an operation of receiving the network operation data collected at the first frequency in S506, and an operation of receiving the third network operation data set in S508. The processing unit may be configured to perform S509.

For another example, the transceiver unit may be configured to perform an operation of receiving the third network operation data set in S602. The processing unit may be configured to perform S603.

For another example, the transceiver unit may be configured to perform an operation of sending query request information in S701, an operation of receiving the query response information in S702, and an operation of receiving the third network operation data set in S706. The processing unit may be configured to perform S707.

For another example, the transceiver unit may be configured to perform an operation of sending configuration information in S804 and an operation of receiving the third network operation data set in S807. The processing unit may be configured to perform S808.

It may be understood that a specific process in which the units perform the foregoing corresponding steps is described in detail in the foregoing method embodiments. For brevity, details are not described herein again.

The transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to respectively perform receiving and sending operations and processing-related operations in the method embodiments.

In addition, the transceiver unit may alternatively be a transceiver circuit (for example, may include a receiving circuit and a sending circuit), and the processing unit may be a processing circuit.

FIG. 10 shows a communication apparatus according to an embodiment of this application. The communication apparatus includes a processor 1001 and a communication interface 1002. The processor 1001 is configured to: execute a computer program or instructions stored in a memory 1003, or read data stored in a memory 1003, to perform the methods in the foregoing method embodiments. For example, there are one or more processors 1001. The communication interface 1002 is configured to: receive and/or send signals.

For example, as shown in FIG. 10, the communication apparatus may further include the memory 1003, and the memory 1003 is configured to store a computer program or instructions and/or data. The memory 1003 and the processor 1001 may be integrated, or may be disposed separately. Certainly, the communication apparatus may alternatively not include the memory 1003, and the memory 1003 may be disposed outside the communication apparatus. For example, there may be one or more memories 1003.

For example, the processor 1001, the communication interface 1002, and the memory 1003 are connected to each other through a bus 1004. The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, only one thick line is used to represent the bus in FIG. 10, but this does not mean that there is only one bus or only one type of bus.

In a first implementation, the communication apparatus may be the network device in the foregoing embodiments, or may be a component (for example, a chip) of the network device. The communication interface and the processor may be configured to implement related operations of the network device.

In a second implementation, the communication apparatus may be the control device in the foregoing embodiments, or may be a component (for example, a chip) of the control device. The communication interface and the processor may be configured to implement related operations of the control device.

It may be understood that the processor (for example, the processor 1001) mentioned in embodiments of this application may be a CPU, a network processor (network processor, NP), or a combination of a CPU and an NP. The processor may further include a hardware chip. The hardware chip may be an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof.

It may be further understood that a memory (for example, the memory 1003) mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

A person of ordinary skill in the art may be aware that, in combination with units and algorithm steps in the examples described in embodiments disclosed in this specification, this application may be implemented by electronic hardware or a combination of computer software and electronic hardware. Whether functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, the disclosed systems, apparatuses and methods may be implemented in another manner. For example, the described apparatus embodiments are merely examples. The unit division is merely logical function division and may be other division in actual implementation. For example, functional units in embodiments of this application may be integrated into one unit, each of the units may exist alone physically, or two or more units may be integrated into one unit.

When embodiments of this application are implemented in a form of software and sold or used as an independent product, a corresponding computer program (which may also be referred to as code or instructions) may be stored in a computer-readable storage medium. This application provides a computer-readable storage medium, including a computer program. When the computer program is run on a computer, the computer is enabled to perform any possible implementation in the foregoing method embodiments.

The computer-readable storage medium includes any medium that can store program code, such as a USB flash drive, a removable hard disk, a ROM, a RAM, a magnetic disk, or an optical disc.

The technical solutions of this application may be embodied in a form of a software product. Therefore, this application further provides a computer program product. The computer program product includes a computer program. When the computer program is run, a computer is enabled to perform any possible implementation in the foregoing method embodiments.

In addition, an embodiment of this application further provides a chip system (or a chip). The chip system includes a logic circuit and an input/output interface.

The logic circuit may be a processing circuit in the chip system. The logic circuit may be coupled and connected to a storage unit, and invoke instructions in the storage unit, so that the chip system can implement the methods and functions in embodiments of this application. The input/output interface may be an input/output circuit in the chip system, and outputs information processed by the chip system, or inputs to-be-processed data or signaling information to the chip system for processing.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data management method, comprising:

obtaining, by a network device, network operation data collected at first frequency and network operation data collected at second frequency, and sending, to a control device, the network operation data collected at the first frequency, wherein the second frequency is higher than the first frequency; and
sending, by the network device, a third network operation data set to the control device in response to determining that a first network operation data set collected at the first frequency and/or a second network operation data set collected at the second frequency comprise/comprises abnormal network operation data, wherein the third network operation data set comprises network operation data collected at the second frequency before a moment of the abnormality, and the moment of the abnormality is a collection moment corresponding to the abnormal network operation data.

2. The method according to claim 1, wherein sending, by the network device to the control device, the network operation data collected at the first frequency comprises:
sending, by the network device to the control device at third frequency, the network operation data collected at the first frequency, wherein the third frequency is lower than or equal to the first frequency.

3. The method according to claim 1 or 2, wherein the third network operation data set comprises network operation data collected at the second frequency within a first preset time range before the moment of the abnormality.

4. The method according to claim 3, wherein the third network operation data set further comprises network operation data collected at the second frequency within a second preset time range after the moment of the abnormality.

5. The method according to claim 1 or 2, wherein the third network operation data set comprises network operation data that is collected at the second frequency before the moment of the abnormality and that is cached in a buffer.

6. The method according to claim 5, wherein the third network operation data set further comprises network operation data that is collected at the second frequency after the moment of the abnormality and that is cached in the buffer.

7. The method according to any one of claims 1 to 6, wherein the method further comprises:
obtaining, by the network device, first indication information, and checking, based on the first indication information, whether the first network operation data set and/or the second network operation data set comprise/comprises abnormal network operation data.

8. The method according to any one of claims 1 to 7, wherein before sending, by the network device, the third network operation data set to the control device, the method further comprises:
determining, by the network device, that resource usage of the network device is less than a preset threshold.

9. The method according to any one of claims 1 to 8, wherein
the abnormal network operation data is network operation data that satisfies an abnormality condition.

10. The method according to claim 9, wherein

the abnormality condition is that a value of the network operation data falls within a preset first abnormality range; or
the abnormality condition is that a value obtained by preprocessing the network operation data falls within a preset second abnormality range.

11. The method according to any one of claims 1 to 10, wherein
the network device is any one of a base station, a core network element, an optical communication device, and a data communication device, the control device is any one of an element management system EMS, a network management system NMS, and an operations support system OSS, and the obtaining, by a network device, network operation data collected at first frequency and network operation data collected at second frequency comprises:
collecting, by the network device, the network operation data at the first frequency and the network operation data at the second frequency.

12. The method according to any one of claims 1 to 10, wherein
the network device is an element management system EMS, the control device is any one of a network management system NMS and an operations support system OSS, and the obtaining, by a network device, network operation data collected at first frequency and network operation data collected at second frequency comprises:

obtaining, by the network device, network operation data collected by a base station at the first frequency and network operation data collected by the base station at the second frequency;
obtaining, by the network device, network operation data collected by a core network element at the first frequency and network operation data collected by the core network element at the second frequency;
obtaining, by the network device, network operation data collected by a data communication device at the first frequency and network operation data collected by the data communication device at the second frequency; or

obtaining, by the network device, network operation data collected by an optical communication device at the first frequency and network operation data collected by the optical communication device at the second frequency.

13. The method according to claim 11 or 12, wherein

the network operation data collected by the base station comprises any one of a base station energy consumption value, a user call drop rate, a user access success rate, reference signal received power, and reference signal received quality;
the network operation data collected by the core network element comprises any one of a user plane throughput, a quantity of user plane sessions, central processing unit CPU usage of the core network element, and memory usage of the core network element;
the network operation data collected by the data communication device comprises any one of a packet delay, a data packet jitter rate, and a data packet loss rate; and
the network operation data collected by the optical communication device comprises any one of receive optical power, transmit optical power, a quantity of received data packets, and a quantity of sent data packets.

14. A data management method, comprising:

receiving, by a control device, network operation data collected at first frequency from a network device;
receiving, by the control device, a third network operation data set from the network device, wherein the third network operation data set comprises network operation data collected at second frequency before a moment of an abnormality, the second frequency is higher than the first frequency, the moment of the abnormality is a collection moment corresponding to abnormal network operation data, and the abnormal network operation data belongs to a first network operation data set collected at the first frequency and/or a second network operation data set collected at the second frequency; and
analyzing, by the control device based on the third network operation data set, a cause of the abnormal network operation data.

15. The method according to claim 14, wherein the analyzing, by the control device based on the third network operation data set, a cause of the abnormal network operation data comprises:
in response to determining, by the control device, that the network operation data collected at the first frequency comprises the abnormal network operation data, analyzing, by the control device based on the third network operation data set, the cause of the abnormal network operation data.

16. The method according to claim 14, wherein the third network operation data set further comprises the abnormal network operation data, and the analyzing, by the control device based on the third network operation data set, a cause of the abnormal network operation data comprises:
in response to determining, by the control device, that the third network operation data set comprises the abnormal network operation data, analyzing, by the control device based on the third network operation data set, the cause of the abnormal network operation data.

17. A data management method, comprising:

obtaining, by a network device, network operation data collected at first frequency and network operation data collected at second frequency, and sending, to a control device, the network operation data collected at the first frequency, wherein the second frequency is higher than the first frequency;
receiving, by the control device, the network operation data collected at the first frequency from the network device;
sending, by the network device, a third network operation data set to the control device in response to determining that a first network operation data set collected at the first frequency and/or a second network operation data set collected at the second frequency comprise/comprises abnormal network operation data, wherein the third network operation data set comprises network operation data collected at the second frequency before a moment of an abnormality, and the moment of the abnormality is a collection moment corresponding to the abnormal network operation data;
receiving, by the control device, the third network operation data set from the network device; and
analyzing, by the control device based on the third network operation data set, a cause of the abnormal network operation data.

18. A communication apparatus, comprising a unit configured to perform the method according to any one of claims 1 to 16.

19. A communication apparatus, comprising a communication interface and a processor, wherein the processor is configured to execute a computer program or instructions, to enable the communication apparatus to perform the method according to any one of claims 1 to 16.

20. A communication system, wherein the communication system comprises a network device and a control device;

the network device is configured to perform the method according to any one of claims 1 to 13; and
the control device is configured to perform the method according to any one of claims 14 to 16.

21. A computer-readable storage medium, comprising a computer program or instructions, wherein when the computer program or the instructions are run on a computer, the computer is enabled to perform the method according to any one of claims 1 to 16.

22. A computer program product, comprising instructions, wherein when the instructions are run on a computer, the computer is enabled to perform the method according to any one of claims 1 to 16.

(a)

(b)

FIG. 1

FIG. 2

| Control device | | Network device |
|---|---|---|

S301: The control device sends query request information to the network device

S302: The network device sends query response information to the control device

S303: The control device sends configuration information to the network device

S304: The network device collects network operation data at first frequency and network operation data at second frequency based on second indication information

S305: The network device sends, to the control device, the network operation data collected at the first frequency

S306: The network device checks, based on first indication information, whether a first network operation data set includes abnormal network operation data

S307: When the first network operation data set includes abnormal network operation data, the network device sends a third network operation data set to the control device

S308: Analyze, based on the third network operation data set, a cause of the abnormal network operation data

FIG. 3

FIG. 4

| Data collection device | | Network device | | Control device |
|---|---|---|---|---|

S501: Send query request information

S501: Send the query request information

S502: Send query response information

S502: Send the query response information

S503: Send the second indication information and the data type information of the network operation data

S503: Send second indication information and data type information of network operation data

S504: Send configuration information

S505: The data collection device collects network operation data at first frequency and network operation data at second frequency based on the second indication information

S505: The data collection device sends, to the network device, the network operation data collected at the first frequency and the network operation data collected at the second frequency

S506: The network device sends, to the control device, the network operation data collected by the data collection device at the first frequency

S507: The network device checks, based on first indication information, whether a first network operation data set collected by the data collection device at the first frequency and/or a second network operation data set collected by the data collection device at the second frequency include/includes abnormal network operation data

S508: When the first network operation data set and/or the second network operation data set include/includes abnormal network operation data, the network device sends a third network operation data set to the control device

S509: Analyze, based on the third network operation data set, a cause of the abnormal network operation data

FIG. 5

```
┌──────────┐                          ┌──────────┐
│ Control  │                          │ Network  │
│  device  │                          │  device  │
└────┬─────┘                          └────┬─────┘
     │                                     │
     │              ┌──────────────────────┴──────────┐
     │              │ S601: The network device obtains │
     │              │ network operation data collected │
     │              │       at second frequency        │
     │              └──────────────────────┬──────────┘
     │                                     │
     │              ┌──────────────────────┴──────────┐
     │              │      S602: The network device    │
     │              │  determines that a second network│
     │              │  operation data set collected at │
     │              │  the second frequency includes   │
     │              │ abnormal network operation data  │
     │              └──────────────────────┬──────────┘
     │   S602: The network device sends     │
     │    a third network operation data    │
     │◄─────set to the control device───────│
     │                                     │
┌────┴─────────────────┐                   │
│ S603: Analyze, based │                   │
│ on the third network │                   │
│ operation data set,  │                   │
│ a cause of the       │                   │
│ abnormal network     │                   │
│ operation data       │                   │
└────┬─────────────────┘                   │
     │                                     │
```

FIG. 6

| Control device | | Network device |
|---|---|---|

S701: The control device sends query request information to the network device

S702: The network device sends query response information to the control device

S703: The control device sends configuration information to the network device

S704: The network device collects network operation data at second frequency based on second indication information, and does not collect network operation data at first frequency

S705: The network device checks, based on first indication information, whether a second network operation data set includes abnormal network operation data

S706: When the second network operation data set includes abnormal network operation data, the network device sends a third network operation data set to the control device

S707: Analyze, based on the third network operation data set, a cause of the abnormal network operation data

FIG. 7

| Data collection device | Network device | Control device |
|---|---|---|

S801: Send query request information

S801: Send the query request information

S802: Send query response information

S802: Send the query response information

S803: Send second indication information and data type information of network operation data

S803: Send the second indication information and the data type information of the network operation data

S804: Send configuration information

S805: Collect network operation data at second frequency based on the second indication information

S805: The data collection device sends, to the network device, the network operation data collected at the second frequency

S806: The network device checks, based on first indication information, whether a second network operation data set collected by the data collection device at the second frequency includes abnormal network operation data

S807: When the second network operation data set includes abnormal network operation data, the network device sends a third network operation data set to the control device

S808: Analyze, based on the third network operation data set, a cause of the abnormal network operation data

FIG. 8

Communication
apparatus

| Transceiver unit 901 | Processing unit 902 |
| --- | --- |

FIG. 9

Communication apparatus

Processor
1001

1004

Memory
1003

Communication
interface
1002

FIG. 10

## INTERNATIONAL SEARCH REPORT

International application No.

**PCT/CN2023/126168**

### A. CLASSIFICATION OF SUBJECT MATTER

H04L43/022(2022.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT; DWPI; ENTXT; 3GPP; CNKI: 频率, 频次, 间隔, 周期, 同时, 分别, 并行, 一起, 两, 第二, 高, 多, 另, 他, 它, 异常, 故障, 问题, 错误, 不正常, 前, 采, 获, 取, 得, 收, 数据, frequency, interval, period, simultaneous, meanwhile, same time, second, quick, high, other, multi+, another, fault, failure, collect, sampl+, data

### C. DOCUMENTS CONSIDERED TO BE RELEVANT

| Category* | Citation of document, with indication, where appropriate, of the relevant passages | Relevant to claim No. |
|---|---|---|
| A | CN 112816623 A (SHENZHEN FUSEN ENVIRONMENTAL TECHNOLOGY CO., LTD.) 18 May 2021 (2021-05-18) entire document | 1-22 |
| A | CN 104201782 A (STATE GRID CORPORATION OF CHINA; STATE GRID JIBEI ELECTRIC POWER CO., LTD., MAINTENANCE BRANCH) 10 December 2014 (2014-12-10) entire document | 1-22 |
| A | CN 105959144 A (INSTITUTE OF INFORMATION ENGINEERING, CHINESE ACADEMY OF SCIENCES) 21 September 2016 (2016-09-21) entire document | 1-22 |
| A | CN 105682121 A (CHINA UNITED NETWORK COMMUNICATIONS GROUP CO., LTD.) 15 June 2016 (2016-06-15) entire document | 1-22 |
| A | WO 2020248274 A1 (HU YONGSHENG; HOU JIANQUN) 17 December 2020 (2020-12-17) entire document | 1-22 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 December 2023** | **02 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 618 500 A1

**INTERNATIONAL SEARCH REPORT**

International application No.

**PCT/CN2023/126168**

**C.    DOCUMENTS CONSIDERED TO BE RELEVANT**

| Category* | Citation of document, with indication, where appropriate, of the relevant passages | Relevant to claim No. |
|---|---|---|
| A | JP 2007006155 A (MITSUBISHI MATERIALS CORPORATION) 11 January 2007 (2007-01-11)<br>    entire document | 1-22 |

INTERNATIONAL SEARCH REPORT
Information on patent family members

International application No.

**PCT/CN2023/126168**

| Patent document cited in search report | | | Publication date (day/month/year) | Patent family member(s) | Publication date (day/month/year) |
|---|---|---|---|---|---|
| CN | 112816623 | A | 18 May 2021 | None | |
| CN | 104201782 | A | 10 December 2014 | None | |
| CN | 105959144 | A | 21 September 2016 | None | |
| CN | 105682121 | A | 15 June 2016 | None | |
| WO | 2020248274 | A1 | 17 December 2020 | None | |
| JP | 2007006155 | A | 11 January 2007 | None | |

Form PCT/ISA/210 (patent family annex) (July 2022)

**REFERENCES CITED IN THE DESCRIPTION**

**Patent documents cited in the description**

- CN 202211578416